# EUROPEAN PATENT SPECIFICATION

(11) **EP 3 858 539 B1**
(45) Date of publication and mention of the grant of the patent: **28.12.2022**
(21) Application number: 19916527.5
(22) Date of filing: 11.06.2019
(51) Int. Cl.: B25B 27/00, B63B 19/00, B63C 11/49, B63G 8/00, B23P 19/00, B23P 19/08, B63B 19/02, F16J 15/3268

(54) **SPHERICAL SECTOR VIEWPORT WINDOW SEALING RING REPLACEMENT APPARATUS AND REPLACEMENT METHOD**
VORRICHTUNG UND VERFAHREN ZUM AUSWECHSELN VON DICHTUNGSRINGEN VON SPHÄRISCHEN BEOBACHTUNGSFENSTER
APPAREIL ET PROCÉDÉ DE REMPLACEMENT DE BAGUE D'ÉTANCHÉITÉ DE HUBLOT D'OBSERVATION SPHÉRIQUE

(30) Priority: 20.02.2019 CN 201910125352
(43) Date of publication of application: 04.08.2021
(73) Proprietor: China Ship Scientific Research Center (the 702 Institute of China Shipbuilding Industry Corporation), Wuxi, Jiangsu 214082 (CN)
(72) Inventor: LIU, Shuai, Wuxi, Jiangsu 214082 (CN); YE, Cong, Wuxi, Jiangsu 214082 (CN); WANG, Dongsheng, Wuxi, Jiangsu 214082 (CN); JIANG, Lei, Wuxi, Jiangsu 214082 (CN); GAO, Chengjun, Wuxi, Jiangsu 214082 (CN); XU, Weizhe, Wuxi, Jiangsu 214082 (CN); LI, Yujie, Wuxi, Jiangsu 214082 (CN)
(74) Representative: Murgitroyd & Company
(86) International application number: PCT/CN2019/090656
(87) International publication number: WO 2020/168654

(56) References cited:
- WO-A1-2014/183615
- CN-A- 101 548 119
- CN-A- 104 723 088
- CN-A- 107 097 054
- CN-A- 108 909 935
- CN-A- 109 702 447
- DE-A1- 4 038 415
- GB-A- 2 194 490
- JP-A- H11 254 245
- US-B2- 8 408 514
- DATABASE WPI Week 201736 Thomson Scientific, London, GB; AN 2017-32333C XP002804869, -& CN 106 639 791 A (BEIJING BOE DISPLAY TECHNOLOGY CO LTD) 10 May 2017 (2017-05-10)
- DATABASE WPI Week 201327 Thomson Scientific, London, GB; AN 2013-E80458 XP002804870, -& CN 102 837 803 A (WUHAN WUCHUAN DEEP-SEA EQUIP ENG CO LTD) 26 December 2012 (2012-12-26)
- DATABASE WPI Week 201115 Thomson Scientific, London, GB; AN 2011-A66476 XP002804871, -& CN 201 669 543 U (ZHEJIANG BIJING SCI&TECHNOLOGY CO LTD) 15 December 2010 (2010-12-15)

## Description

### TECHNICAL FIELD

The present application relates to the technical field of overhaul of manned submersibles, and particularly relates to a spherical sector viewport window sealing ring replacing device and a replacing method which are suitable for large-size sphericalsector viewport windows.

### BACKGROUND

In order to meet the needs of crews for maximization of the field of view, large-size spherical sector viewport windows have gradually become the standard design of manned submersibles. In order to prevent the external sea (fresh) water from entering a manned cabin, a sealing ring is usually mounted in a sealing groove formed by a spherical sector viewport window, a metal window seat and a pressure ring. Due to the aging of the sealing ring, in order to ensure the sealing performance of the structure, the sealing ring needs to be replaced regularly. Since the spherical sector viewport window is fixed only by the pre-pressing of the pressure ring, but the pressure ring must be dismounted to replace the sealing ring, if the pressure ring is directly dismounted, the spherical sector viewport window will be separated from the window seat and fall off directly. CN106639791, DE4038415, CN108909935 and GB 2 194 490 A describe observing window seal structures and related devices.

### SUMMARY

### Technical Problems

The conventional replacement mode is to return the submersible to the factory for repairing. The spherical sector viewport window together with the window seat and pressure ring are integrally dismounted, the integral is placed horizontally for dismounting pressure ring, the sealing ring is replaced, and then, the integral is remounted on the submersible. The whole process is time-consuming and laborious and is long in period and high in cost.

In view of the above defects in the existing production technology, the applicant provides a spherical sector viewport window sealing ring replacing device and a replacing method. The pre-pressure of the tools is used to replace the pre-pressure of the pressure ring on the spherical sector viewport window, so that after the pressure ring is dismounted, the spherical sector viewport window can still be firmly fixed on the window seat of the spherical sector viewport window, thereby greatly improving the portability and reliability of replacement.

### Solutions

### Technical Solutions

The present invention provides spherical sector viewport window sealing ring replacing device according to claim 1 and replacing method using said spherical sector viewport window sealing ring replacing device according to claim 6. Preferred embodiments are provided in the dependent claims.

A spherical sector viewport window sealing ring replacing device is disclosed in claim 1, wherein the sealing ring replacing device is used to replace a sealing ring mounted in a sealing groove formed by a spherical sector viewport window, wherein the spherical sector viewport window is mounted on a window seat, the window seat is mounted on a flange, through a plurality of O-rings, and a pressure ring, wherein the spherical sector viewport window is mounted on the window seat, wherein a pressure ring is mounted on a circumferential surface of the joint of the spherical sector viewport window and the window seat through a pressure ring rubber pad and a sealing device, and at the same time, the pressure ring is locked with the window seat through hexagon socket bolts; and the sealing ring replacing device comprising a plurality of replacement tools to be mounted at intervals in a circumferential direction of the window seat.

A single replacement tool structurally includes a support, a right-angle frame is extended upward at the rear end of the support, one of the right-angle sides of the right-angle frame is provided with a through hole, a long bolt is mounted at the through hole and is connected with the window seat and the flange and locked through a first nut, a mounting sleeve is extended downward at the bottom of the front end of the support, a screw rod is mounted in the mounting sleeve and fixed through a second nut, a pressure plate is fixed at the bottom of the screw rod, and the bottom surface of the pressure plate abuts against the spherical sector viewport window through a tool rubber pad.

Preferred embodiments are as follows:
24 replacement tools are uniformly distributed in a circumferential direction of the window seat at intervals.

The mounting sleeve and the support are arranged obliquely, and an included angle between the mounting sleeve and the support is 60 degrees.

The support is of a flat cuboid structure, and a pull ring is horizontally extended outward at the front end of the support.

The cross section of the pressure ring is of an "L"-type structure.

A replacing method according to the invention using the spherical sector viewport window sealing ring replacing device of claim 1 includes the following operation steps:
step I: firstly, mounting the replacement tools one by one, specifically, mounting the nut on the screw rod, screwing the nut from the top end of the threaded section of the screw rod to the bottom end, and mounting the screw rod in the mounting sleeve at the bottom of the support;
step II: dismounting connecting bolts of the window seat and the flange, and mounting the 24 replacement tools on the window seat and the flange one by one, wherein a replacement tool is mounted while a connecting bolt is dismounted, and so on, until the 24 replacement tools are completely mounted, that is, the connecting bolts are completely dismounted;
step III: mounting the new sealing ring between the replacement tools and the window seat from a gap between the screw rod and an outer spherical surface of the spherical sector viewport window;
step IV: mounting the pressure plate and the tool rubber pad, finely adjusting the mounting angle of the pressure plate during the mounting process to enable the pressure plate and the pre-pressing region of the spherical sector viewport window to be parallel as much as possible, and enlarging the pre-pressing area of the rubber pad and the spherical sector viewport window to enable the pre-pressure to be uniformly transmitted to the spherical sector viewport window as much as possible; adjusting the screw-in length of the screw rod by using a pipe wrench, and after the screw rod is adjusted in place, tightly screwing the second nut to realize effective pre-pressing of the spherical sector viewport window, wherein the mounting of the pressure plate and the rubber pad should follow the principle of diagonal mounting; diagonally mounting four tie-down straps by reserved connectors of the support to hold the spherical sector viewport window, tightening the tie-down straps to further reduce the risks of falling and sliding of the spherical sector viewport window, and isolating the contact position between each of the tie-down straps and the spherical sector viewport window by a rubber pad;
step V: dismounting four of the hexagon socket bolts (the interval between every two of the four hexagon socket bolts is 90 degrees), and mounting four new lengthened bolts instead of the hexagon socket bolts on the window seat;
step VI: dismounting all hexagon socket bolts, and separating the pressure ring;
step VII: dismounting the old sealing ring from a gap between the pressure ring and the spherical sector viewport window, and mounting the new sealing ring in a groove of the pressure ring;
step VIII: pushing the pressure ring to gradually approach the window seat, and remounting the hexagon socket bolts on the window seat, wherein the hexagon socket bolts should be mounted slowly circle by circle, and the mounting process follows the principle of diagonal mounting to ensure the compression uniformity of the new sealing ring;
step IX: dismounting the four new lengthened bolts, and mounting hexagon socket bolts in place; and
step X: dismounting the replacement tools one by one, and remounting the connecting bolts of the window seat and the flange.

### Beneficial Effects of the Present Invention

### Beneficial Effects

The present application is compact and reasonable in structure and convenient in operation. By mounting a plurality of replacement tools in the circumferential direction of the window seat, the replacement work of new and old sealing rings can be conveniently completed, the operation is simple and convenient, and there is no need to dismount the whole mechanism for mounting, thereby greatly simplifying the work and improving the work efficiency.

In a replacement tool, a base of the support is connected with a metal window seat of the spherical sector viewport window through bolts, and a certain space is reserved on the outer circumferential side of the support and the pressure ring for manual adjustment of a circumferential mounting angle; the determination of the length of the support fully considers the dismounting space of the pressure ring; connectors connected with hooks of the tie-down straps are arranged at the other end of the support, so that a tie-down device is used to hold the spherical sector viewport window, so as to further pre-press the observation window and prevent the observation window from falling; and an internal threaded sleeve is arranged under the support, and the included angle between the sleeve and the horizontal plane is the same as the angle between a connecting line from a pre-pressing point to the center of a sphere of the spherical sector viewport window and the horizontal surface.

In a replacement tool, one section of the screw rod is provided with external threads, and the other section of the screw rod has no thread; the external threaded section is mounted in the sleeve of the support, and the screw-in length of the screw rod can be adjusted through threads; and a locating cone is arranged at the bottom end of the threadless section.

In a replacement tool, the pressure plate is a flat plate, a guide hole is formed in the center of the top surface of the pressure plate, the locating cone of the screw rod is inserted into the guide hole of the pressure plate, and the diameter of the guide hole is slightly greater than the diameter of the screw rod, so that the pre-pressing angle can be finely adjusted.

In a replacement tool, the rubber pad is made of silica gel and is mounted between the outer spherical surface of the observation window and the pressure plate, so that on the one hand, direct contact between the pressure plate and the glass of the observation window is prevented, and on the other hand, the contact area of the pressure plate pre-pressing the observation window is increased as much as possible by means of the elasticity of the rubber pad.

### BRIEF DESCRIPTION OF THE DRAWINGS

### Description of the Drawings

FIG. 1 is a schematic structural view of the present application.
FIG. 2 is a front view of the present application.
FIG. 3 is a side view of FIG. 2.
FIG. 4 is a full section view along a cross section A-A in FIG. 3.
FIG. 5 is a partially enlarged view of a part B in FIG. 4 (when the pressure ring is not dismounted).
FIG. 6 is a partially enlarged view of a part B in FIG. 4 (when the pressure ring is dismounted).
FIG. 7 is a partially enlarged view of a part C in FIG. 4 (when the pressure ring is not dismounted).
FIG. 8 is a partially enlarged view of a part C in FIG. 4 (when the pressure ring is dismounted).
FIG. 9 is a schematic structural view of a replacement tool of the present application.

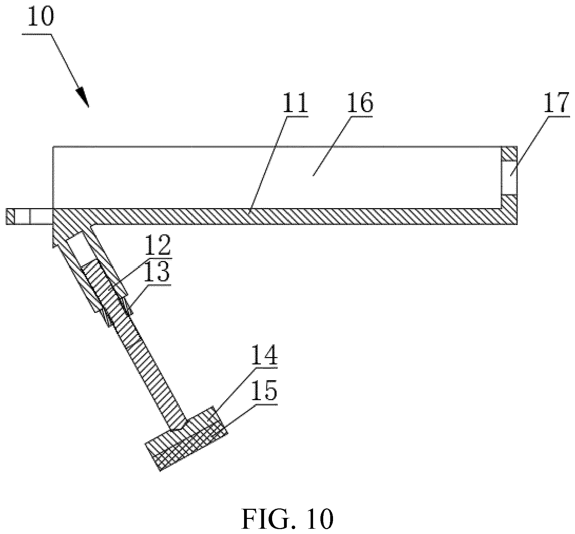

FIG. 10 is a front view (full section view) of a replacement tool of the present application.

In figures: 10 denotes replacement tool; 11 denotes support; 12 denotes screw rod; 13 denotes second nut; 14 denotes pressure plate; 15 denotes tool rubber pad; 16 denotes right-angle frame; 17 denotes through hole; 21 denotes flange; 22 denotes window seat; 23 denotes spherical sector viewport window; 24 denotes pressure ring; 25 denotes long bolt; 26 denotes pressure ring rubber pad; 27 denotes old sealing ring; 28 denotes O-ring; 29 denotes first nut; 30 denotes new sealing ring; 31 denotes hexagon socket bolt.

### DETAILED DESCRIPTION

### Embodiment of the Present Invention

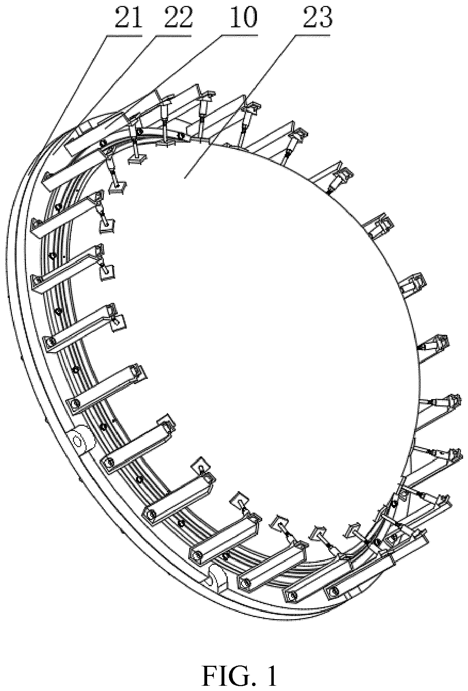

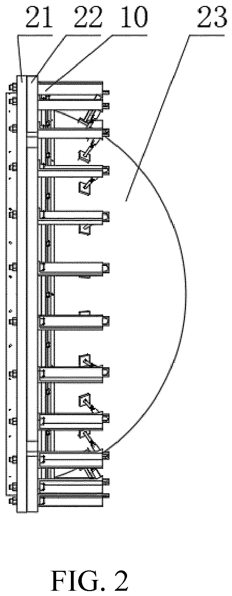

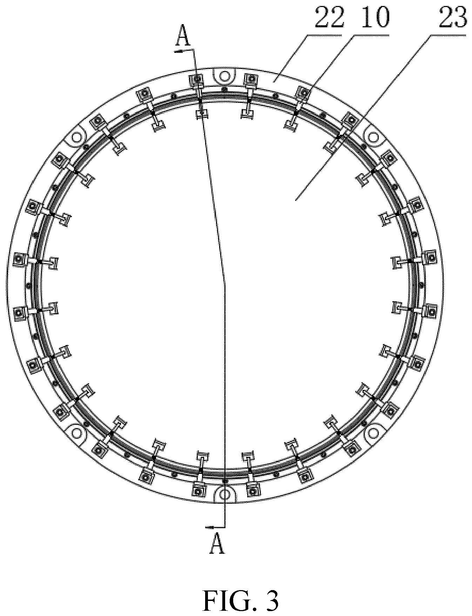

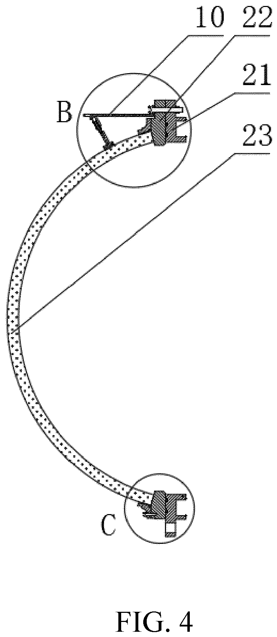

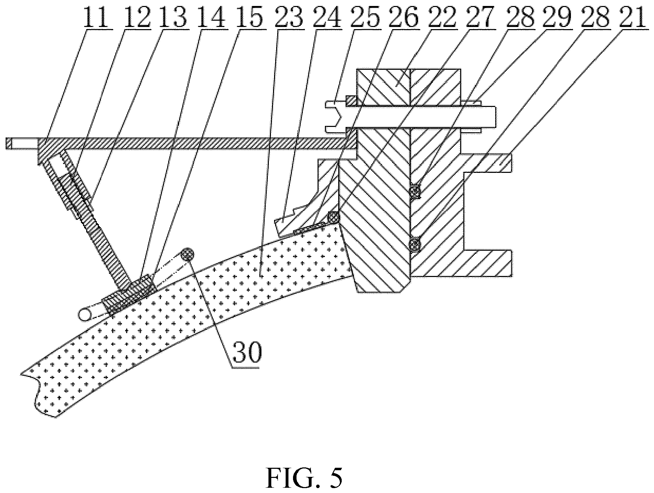

As shown in FIG. 1 to FIG. 8, a spherical sector viewport window sealing ring replacing device of the present embodiment is used to replace a sealing ring mounted in a sealing groove formed by the spherical sector viewport window, wherein the spherical sector viewport window is mounted on a window seat 22, the window seat 22 is mounted on the flange 21 through a plurality of O-rings 28, a spherical sector viewport window 23 is mounted on the window seat 22, a pressure ring 24 is mounted on a circumferential surface of the joint of the spherical sector viewport window 23 and the window seat 22 through a pressure ring rubber pad 26 and a sealing device, and at the same time, the pressure ring 24 is locked with the window seat 22 through hexagon socket bolts 31. A plurality of replacement tools 10 are also mounted at intervals in a circumferential direction of the window seat 22;

A single replacement tool 10 structurally includes a support 11, a right-angle frame 16 is extended upward at the rear end of the support 11, one of the right-angle sides of the right-angle frame 16 is provided with a through hole 17, a long bolt 25 is mounted at the through hole 17 and is connected with the window seat 22 and the flange 21 and locked through a first nut 29, a mounting sleeve is extended downward at the bottom of the front end of the support 11, a screw rod 12 is mounted in the mounting sleeve and fixed through a second nut 13, a pressure plate 14 is fixed at the bottom of the screw rod 12, and the bottom surface of the pressure plate 14 abuts against the spherical sector viewport window 23 through a tool rubber pad 15.

24 replacement tools 10 are uniformly distributed in a circumferential direction of the window seat 22 at intervals.

The mounting sleeve and the support 11 are arranged obliquely, and an included angle between the mounting sleeve and the support is 60 degrees.

The support 11 is of a flat cuboid structure, and a pull ring is horizontally extended outward at the front end of the support.

The cross section of the pressure ring 24 is of an "L"-type structure.

A replacing method using the spherical sector viewport window sealing ring replacing device of the present embodiment includes the following operation steps:
step I: mounting the replacement tools 10 one by one, specifically, mounting the second nut 13 on the screw rod 12, screwing the second nut 13 from the top end of the threaded section of the screw rod 12 to the bottom end, and mounting the screw rod 12 in the mounting sleeve at the bottom of the support 11;
step II: dismounting connecting bolts of the window seat 22 and the flange 21, and mounting the 24 replacement tools 10 on the window seat 22 and the flange 21 one by one, wherein a replacement tool 10 is mounted while a connecting bolt is dismounted, and so on, until the 24 replacement tools 10 are completely mounted, that is, the connecting bolts are completely dismounted;
step III: mounting the new sealing ring 30 between the replacement tools 10 and the window seat 22 from a gap between the screw rod 12 and an outer spherical surface of the spherical sector viewport window 23;
step IV: mounting the pressure plate 14 and the tool rubber pad 15, finely adjusting the mounting angle of the pressure plate 14 during the mounting process to enable the pressure plate 14 and the pre-pressing region of the spherical sector viewport window 23 to be parallel as much as possible, and enlarging the pre-pressing area of the tool rubber pad 15 and the spherical sector viewport window 23 to enable the pre-pressure to be uniformly transmitted to the spherical sector viewport window 23 as much as possible; adjusting the screw-in length of the screw rod 12 by using a pipe wrench, and after the screw rod 12 is adjusted in place, tightly screwing the second nut 13 to realize effective pre-pressing of the spherical sector viewport window 23, wherein the mounting of the pressure plate 14 and the tool rubber pad 15 should follow the principle of diagonal mounting; diagonally mounting four tie-down straps by reserved connectors of the support 11 to hold the spherical sector viewport window 23, tightening the tie-down straps to further reduce the risks of falling and sliding of the spherical sector viewport window 23, and isolating the contact position between each of the tie-down straps and the spherical sector viewport window 23 by a rubber pad;
step V: dismounting four of the hexagon socket bolts 31 (the interval between every two of the four hexagon socket bolts 31 is 90 degrees), and mounting four new lengthened bolts instead of the hexagon socket bolts 31 on the window seat 22;
step VI: dismounting all hexagon socket bolts 31, and separating the pressure ring 24;
step VII: dismounting the old sealing ring 27 from a gap between the pressure ring 24 and the spherical sector viewport window 23, and mounting the new sealing ring 30 in a groove of the pressure ring 24;
step VIII: pushing the pressure ring 24 to gradually approach the window seat 22, and remounting the hexagon socket bolts 31 on the window seat 22, wherein the hexagon socket bolts 31 should be mounted slowly circle by circle, and the mounting process follows the principle of diagonal mounting to ensure the compression uniformity of the new sealing ring 30;
step IX: dismounting the four new lengthened bolts, and mounting hexagon socket bolts 31 in place; and
step X: dismounting the replacement tools 10 one by one, and remounting the connecting bolts of the window seat 22 and the flange 21.

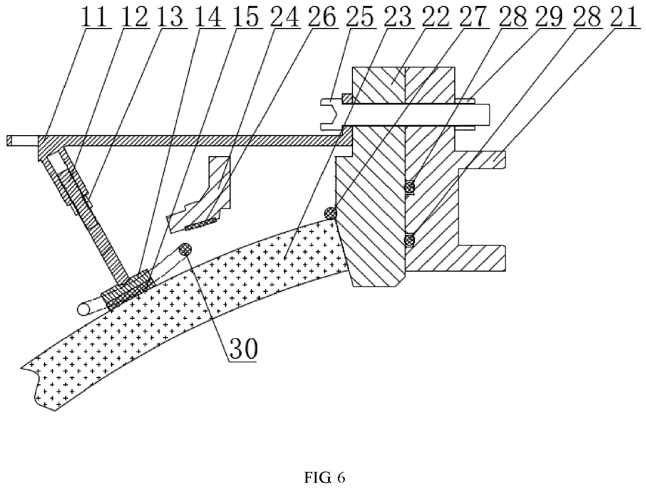

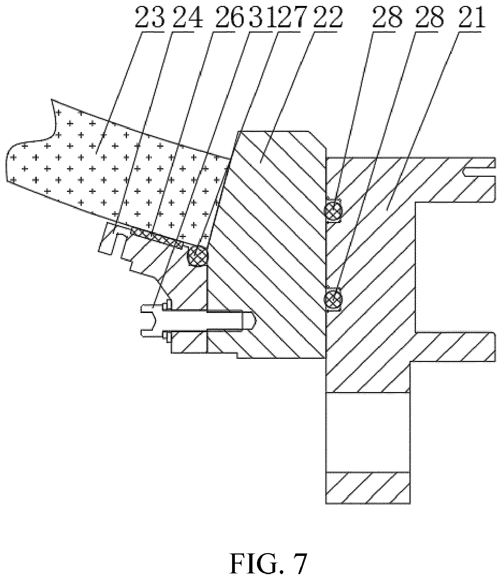

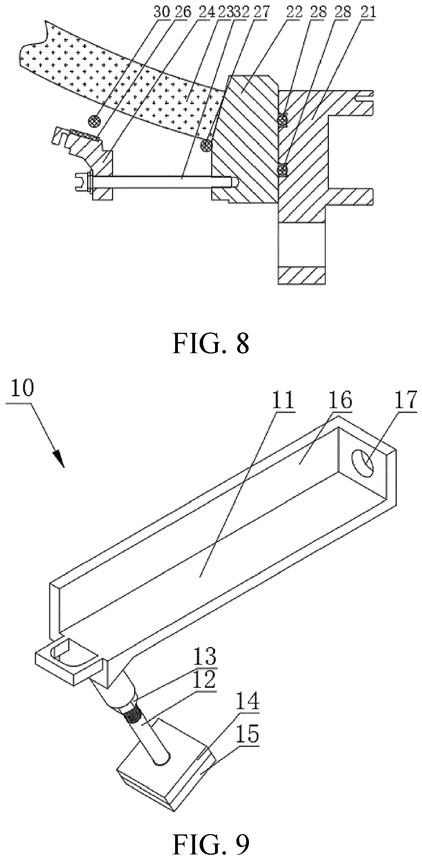

In an actual work process, the specific flows are as follows:
(I) Firstly, the second nut 13 is mounted on the screw rod 12, and the nut is screwed from the top end of the threaded section of the screw rod to the bottom end.
(II) The screw rod 12 is mounted in the internal threaded sleeve of the support 11, and the threaded section of the screw rod is screwed into the sleeve (mounting sleeve) as much as possible to reserve an enough space to ensure the mounting path of the new sealing ring 30.
(III) Connecting bolts of the window seat 22 and the flange 21 are dismounted. For ease of operation, the tool support 11 is mounted on the window seat 22 and the flange 21 by the long bolt 25 and the first nut 29, and the circumferential mounting angle of the support 11 is adjusted by the reserved space on the outer circumferential side of the support 11 and the pressure ring 24, so that the pressure plate 14 and the tool rubber pad 15 can better pre-press the spherical sector viewport window 23. In order not to affect the sealing effect of the O-rings 28 between the window seat 22 and the flange 21, when the connecting bolts of the window seat 22 and the flange 21 are dismounted, the principle of dismounting a bolt and then mounting a support 11 is strictly followed. After the support 11 is mounted in place, the next bolt can be dismounted.
(IV) After the supports 11 are completely mounted on the window seat 22 and the flange 21, the new sealing ring 30 is mounted between the replacement tools 10 and the window seat 22 from a gap between the tool screw rod 12 and an outer spherical surface of the spherical sector viewport window 23, and the mounting path is shown by double dot dash lines in FIG. 6.
(V) The tool pressure plate 14 and the tool rubber pad 15 are mounted, the mounting angle of the pressure plate 14 is finely adjusted during the mounting process to enable the pressure plate 14 and the pre-pressing region of the spherical sector viewport window 23 to be parallel as much as possible, and the pre-pressing area of the tool rubber pad 15 and the spherical sector viewport window 23 is enlarged to enable the pre-pressure to be uniformly transmitted to the spherical sector viewport window 23 as much as possible. The screw-in length of the screw rod 12 is adjusted by using a pipe wrench, and after the screw rod is adjusted in place, the second nut 13 is tightly screwed to realize effective pre-pressing of the spherical sector viewport window 23, wherein the mounting of the pressure plate 14 and the tool rubber pad 15 should follow the principle of diagonal mounting. 4 tie-down straps are diagonally mounted by reserved connectors of the support 11 to hold the spherical sector viewport window 23, and the tie-down straps are tightened to further reduce the risks of falling and sliding of the spherical sector viewport window 23. The contact position between each of the tie-down straps and the spherical sector viewport window 23 is isolated by a rubber pad.
(VI) To dismount the old sealing ring 27, the pressure ring 24 must be dismounted first (as shown in FIG. 7). In order to prevent the pressure ring 24 from falling, 4 hexagon socket bolts 31 (the interval between every two of the four hexagon socket bolts is 90°) are dismounted first (as shown in FIG. 7). 4 lengthened bolts instead of the hexagon socket bolts 31 are mounted on the window seat 22 (as shown in FIG. 8). The lengthened bolts have two functions: one function is to locate the pressure ring 24 and the window seat 22, and the other function is to support the self-weight of the pressure ring 24 during the process of dismounting the pressure ring 24 so as to prevent the pressure ring 24 from falling and misaligning.
(VII) All hexagon socket bolts 31 are dismounted, and the pressure ring 24 is separated.
(VIII) The old sealing ring 27 of the observation window is dismounted from a gap between the pressure ring 24 and the spherical sector viewport window 23, and the new sealing ring 30 is mounted in a groove of the pressure ring 24.
(IX) The pressure ring 24 is pushed to gradually approach the window seat 22, and the hexagon socket bolts 31 are remounted on the window seat 22, wherein the hexagon socket bolts 31 should be mounted slowly circle by circle, and the mounting process follows the principle of diagonal mounting to ensure the compression uniformity of the new sealing ring 30. Finally, the 4 lengthened bolts are dismounted, and hexagon socket bolts 31 are mounted in place. During the mounting process of the pressure ring 24, a dedicated person in the manned cabin monitors the mounting quality of the sealing ring in real time.
(X) The tools are dismounted one by one, and the fastening bolts of the window seat 22 and the flange 21 are remounted.

The operation is simple and convenient, and the work efficiency is high.

## Claims

1. A spherical sector viewport window sealing ring replacing device, wherein the sealing ring replacing device is used to replace a sealing ring (27) mounted in a sealing groove formed by a spherical sector viewport window (23), wherein the spherical sector viewport window (23) is mounted on a window seat (22), the window seat being mounted on a flange (21),through a plurality of O-rings (28),
wherein a pressure ring (24) is mounted on a circumferential surface of the joint of the spherical sector viewport window (23) and the window seat (22) through a pressure ring rubber pad (26) and a sealing device, and at the same time, the pressure ring (24) is locked with the window seat (22) through hexagon socket bolts (31); the sealing ring replacing device comprising a plurality of replacement tools (10) to be mounted at intervals in a circumferential direction of the window seat (22); wherein
a single replacement tool (10) structurally comprises a support (11), a right-angle frame (16) is extended upward at the rear end of the support (11), one of the right-angle sides of the right-angle frame (16) is provided with a through hole (17), a long bolt (25) is mounted at the through hole (17) and is connected with the window seat (22) and the flange (21) and locked through a first nut (29), a mounting sleeve is extended downward at the bottom of the front end of the support (11), a screw rod (12) is mounted in the mounting sleeve and fixed through a second nut (13), a pressure plate (14) is fixed at the bottom of the screw rod (12), and the bottom surface of the pressure plate (14) abuts against the spherical sector viewport window (23) through a tool rubber pad (15).

2. The spherical sector viewport window sealing ring replacing device according to claim 1, wherein 24 replacement tools (10) are uniformly distributed in a circumferential direction of the window seat (22) at intervals.

3. The spherical sector viewport window sealing ring replacing device according to claim 1, wherein the mounting sleeve and the support (11) are arranged obliquely, and an included angle between the mounting sleeve and the support is 60 degrees.

4. The spherical sector viewport window sealing ring replacing device according to claim 1, wherein the support (11) is of a flat cuboid structure, and a pull ring is horizontally extended outward at the front end of the support.

5. The spherical sector viewport window sealing ring replacing device according to claim 1, wherein the cross section of the pressure ring (24) is of an "L"-type structure.

6. A replacing method using the spherical sector viewport window sealing ring replacing device according to claim 1, comprising the following operation steps:
step I: firstly, mounting the replacement tools (10) one by one, specifically, mounting the second nut (13) on the screw rod (12), screwing the second nut (13) from the top end of the threaded section of the screw rod (12) to the bottom end, and mounting the screw rod (12) in the mounting sleeve at the bottom of the support (11);
step II: dismounting connecting bolts of the window seat (22) and the flange (21), and mounting 24 replacement tools (10) on the window seat (22) and the flange (21) one by one, wherein a replacement tool (10) is mounted while a connecting bolt is dismounted, and so on, until the 24 replacement tools (10) are completely mounted, that is, the connecting bolts are completely dismounted;
step III: mounting a new sealing ring (30) between the replacement tools (10) and the window seat (22) from a gap between the screw rod (12) and an outer spherical surface of the spherical sector viewport window (23);
step IV: mounting the pressure plate (14) and the tool rubber pad (15), finely adjusting the mounting angle of the pressure plate (14) during the mounting process to enable the pressure plate (14) and the pre-pressing region of the spherical sector viewport window (23) to be parallel as much as possible, and enlarging the pre-pressing area of the tool rubber pad (15) and the spherical sector viewport window (23) to enable the pre-pressure to be uniformly transmitted to the spherical sector viewport window (23) as much as possible; adjusting the screw-in length of the screw rod (12) by using a pipe wrench, and after the screw rod is adjusted in place, tightly screwing the second nut (13) to realize effective pre-pressing of the spherical sector viewport window (23), wherein the mounting of the pressure plate (14) and the tool rubber pad (15) should follow the principle of diagonal mounting; diagonally mounting four tie-down straps by reserved connectors of the support (11) to hold the spherical sector viewport window (23), tightening the tie-down straps to further reduce the risks of falling and sliding of the spherical sector viewport window (23), and isolating the contact position between each of the tie-down straps and the spherical sector viewport window (23) by a rubber pad;
step V: dismounting four of the hexagon socket bolts (31) (the interval between every two of the four hexagon socket bolts (31) is 90 degrees), and mounting four new lengthened bolts instead of the hexagon socket bolts (31) on the window seat (22);
step VI: dismounting all hexagon socket bolts (31), and separating the pressure ring (24);
step VII: dismounting an old sealing ring (27) from a gap between the pressure ring (24) and the spherical sector viewport window (23), and mounting a new sealing ring (30) in a groove of the pressure ring (24);
step VIII: pushing the pressure ring (24) to gradually approach the window seat (22), and remounting the hexagon socket bolts (31) on the window seat (22), wherein the hexagon socket bolts (31) should be mounted slowly circle by circle, and the mounting process follows the principle of diagonal mounting to ensure the compression uniformity of the new sealing ring (30);
step IX: dismounting the four new lengthened bolts, and mounting hexagon socket bolts (31) in place; and
step X: dismounting the replacement tools (10) one by one, and remounting the connecting bolts of the window seat (22) and the flange (21).

## Patentansprüche

1. Eine Dichtungsring-Ersatzvorrichtung für ein Kugelsektor-Sichtfenster, wobei die Dichtungsring-Ersatzvorrichtung verwendet wird, um einen Dichtungsring (27) zu ersetzen, der in einer Dichtungsnut montiert ist, die von einem Kugelsektor-Sichtfenster (23) gebildet wird, wobei das Kugelsektor-Sichtfenster (23) an einem Fenstersitz (22) montiert ist, wobei der Fenstersitz durch eine Vielzahl von O-Ringen (28) an einem Flansch (21) montiert ist,
wobei ein Druckring (24) durch ein Druckring-Gummipolster (26) und eine Dichtungsvorrichtung an einer Umfangsfläche der Verbindungsstelle des Kugelsektor-Sichtfensterfensters (23) und des Fenstersitzes (22) montiert ist, und gleichzeitig der Druckring (24) durch Innensechskantbolzen (31) mit dem Fenstersitz (22) verriegelt ist; wobei die Dichtungsring-Ersatzvorrichtung eine Vielzahl von Ersatzwerkzeugen (10) beinhaltet, die in Intervallen in einer Umfangsrichtung des Fenstersitzes (22) zu montieren sind; wobei
ein einzelnes Ersatzwerkzeug (10) strukturell einen Träger (11) beinhaltet, ein rechtwinkliger Rahmen (16) sich an dem hinteren Ende des Trägers (11) nach oben erstreckt, eine der rechtwinkligen Seiten des rechtwinkligen Rahmens (16) mit einem Durchgangsloch (17) versehen ist, ein langer Bolzen (25) an dem Durchgangsloch (17) montiert ist und mit dem Fenstersitz (22) und dem Flansch (21) verbunden und durch eine erste Mutter (29) verriegelt ist, eine Montagehülse sich an der Unterseite des vorderen Endes des Trägers (11) nach unten erstreckt, eine Schraubenstange (12) in der Montagehülse montiert und durch eine zweite Mutter (13) fixiert ist, eine Druckplatte (14) an der Unterseite der Schraubenstange (12) fixiert ist und die untere Fläche der Druckplatte (14) mit einem Gummipolsterwerkzeug (15) an das Kugelsektor-Sichtfenster (23) anstößt.

2. Dichtungsring-Ersatzvorrichtung für ein Kugelsektor-Sichtfenster gemäß Anspruch 1, wobei 24 Ersatzwerkzeuge (10) gleichmäßig in Intervallen in einer Umfangsrichtung des Fenstersitzes (22) verteilt sind.

3. Dichtungsring-Ersatzvorrichtung für ein Kugelsektor-Sichtfenster gemäß Anspruch 1, wobei die Montagehülse und der Träger (11) schräg angeordnet sind und ein eingeschlossener Winkel zwischen der Montagehülse und dem Träger 60 Grad beträgt.

4. Dichtungsring-Ersatzvorrichtung für ein Kugelsektor-Sichtfenster gemäß Anspruch 1, wobei der Träger (11) eine flache, quaderförmige Struktur aufweist und sich ein Zugring an dem vorderen Ende des Trägers horizontal nach außen erstreckt.

5. Dichtungsring-Ersatzvorrichtung für ein Kugelsektor-Sichtfenster gemäß Anspruch 1, wobei der Querschnitt des Druckrings (24) eine "L"-förmige Struktur aufweist.

6. Ein Ersatzverfahren unter Verwendung einer Dichtungsring-Ersatzvorrichtung für ein Kugelsektor-Sichtfenster gemäß Anspruch 1, das die folgenden Arbeitsschritte beinhaltet:
Schritt I: erstens, Montieren der Ersatzwerkzeuge (10) eines nach dem anderen, insbesondere Montieren der zweiten Mutter (13) auf der Schraubenstange (12), Schrauben der zweiten Mutter (13) von dem oberen Ende des Gewindeabschnitts der Schraubenstange (12) zu dem unteren Ende und Montieren der Schraubenstange (12) in der Montagehülse an der Unterseite des Trägers (11);
Schritt II: Abmontieren von Verbindungsbolzen des Fenstersitzes (22) und des Flansches (21) und Montieren von 24 Ersatzwerkzeugen (10) auf dem Fenstersitz (22) und dem Flansch (21), eines nach dem anderen, wobei ein Ersatzwerkzeug (10) montiert wird, während ein Verbindungsbolzen abmontiert wird, und so weiter, bis die 24 Ersatzwerkzeuge (10) vollständig montiert sind, d. h. die Verbindungsbolzen vollständig abmontiert sind;
Schritt III: Montieren eines neuen Dichtungsrings (30) zwischen den Ersatzwerkzeugen (10) und dem Fenstersitz (22) aus einem Spalt zwischen der Schraubenstange (12) und einer äußeren kugelförmigen Oberfläche des Kugelsektor-Sichtfensters (23);
Schritt IV: Montieren der Druckplatte (14) und des Gummipolsterwerkzeugs (15), Feineinstellen des Montagewinkels der Druckplatte (14) während des Montagevorgangs, damit die Druckplatte (14) und der Druckvorstufenbereich des Kugelsektor-Sichtfensters (23) möglichst parallel sind, und Vergrößern des Druckvorstufenbereichs des Gummipolsterwerkzeugs (15) und des Kugelsektor-Sichtfensters (23), damit der Vordruck möglichst gleichmäßig auf das Kugelsektor-Sichtfenster (23) übertragen werden kann; Einstellen der Einschraublänge der Schraubenstange (12) unter Verwendung einer Rohrzange und, nachdem die Schraubenstange an Ort und Stelle eingestellt ist, Festschrauben der zweiten Mutter (13), um ein wirksames Vordrucken des Kugelsektor-Sichtfensters (23) zu realisieren, wobei das Montieren der Druckplatte (14) und des Gummipolsterwerkzeugs (15) dem Prinzip der diagonalen Montage folgen sollte; diagonales Montieren von vier Spanngurten durch reservierte Verbinder des Trägers (11), um das Kugelsektor-Sichtfenster (23) zu halten, Festziehen der Spanngurte, um das Risiko des Herabfallens und Verrutschens des Kugelsektor-Sichtfensters (23) weiter zu verringern, und Isolieren der Kontaktposition zwischen jedem der Spanngurte und dem Kugelsektor-Sichtfenster (23) durch ein Gummipolster;
Schritt V: Abmontieren von vier der Innensechskantbolzen (31) (das Intervall zwischen jeweils zwei der vier Innensechskantbolzen (31) beträgt 90 Grad) und Montieren von vier neuen verlängerten Bolzen anstelle der Innensechskantbolzen (31) auf dem Fenstersitz (22);
Schritt VI: Abmontieren aller Innensechskantbolzen (31) und Abtrennen des Druckrings (24);
Schritt VII: Abmontieren eines alten Dichtungsrings (27) aus einem Spalt zwischen dem Druckring (24) und dem Kugelsektor-Sichtfenster (23) und Montieren eines neuen Dichtungsrings (30) in einer Nut des Druckrings (24);
Schritt VIII: Schieben des Druckrings (24), damit er sich allmählich dem Fenstersitz (22) annähert, und erneutes Montieren der Innensechskantbolzen (31) auf dem Fenstersitz (22), wobei die Innensechskantbolzen (31) langsam Kreis für Kreis montiert werden sollten und der Montagevorgang dem Prinzip der diagonalen Montage folgt, um die Gleichmäßigkeit der Verdichtung des neuen Dichtungsrings (30) zu gewährleisten;
Schritt IX: Abmontieren der vier neuen verlängerten Bolzen und Montieren der Innensechskantbolzen (31) an Ort und Stelle; und
Schritt X: Abmontieren der Ersatzwerkzeuge (10), eines nach dem anderen, und erneutes Montieren der Verbindungsbolzen des Fenstersitzes (22) und des Flansches (21).

## Revendications

1. Un dispositif de remplacement de bague d'étanchéité pour fenêtre à hublot à secteur sphérique, où le dispositif de remplacement de bague d'étanchéité est utilisé pour remplacer une bague d'étanchéité (27) montée dans une rainure d'étanchéité formée par une fenêtre à hublot à secteur sphérique (23), où la fenêtre à hublot à secteur sphérique (23) est montée sur une assise de fenêtre (22), l'assise de fenêtre étant montée sur une bride (21), par le biais d'une pluralité de joints toriques (28),
où un anneau de pression (24) est monté sur une surface de la circonférence du joint de la fenêtre à hublot à secteur sphérique (23) et l'assise de fenêtre (22) par le biais d'un tampon de caoutchouc pour anneau de pression (26) et d'un dispositif d'étanchéité, et, en même temps, l'anneau de pression (24) est verrouillé avec l'assise de fenêtre (22) par le biais de boulons à douille hexagonale (31) ; le dispositif de remplacement de bague d'étanchéité comprenant une pluralité d'outils de remplacement (10) devant être montés à intervalles dans le sens de la circonférence de l'assise de fenêtre (22) ; où
chaque outil de remplacement (10) comprend structurellement un support (11), un cadre à angle droit (16) s'étend vers le haut au niveau de l'extrémité arrière du support (11), un des côtés à angle droit du cadre à angle droit (16) est pourvu d'un trou débouchant (17), un long boulon (25) est monté au niveau du trou débouchant (17) et est assemblé avec l'assise de fenêtre (22) et la bride (21) et verrouillé par le biais d'un premier écrou (29), un manchon de montage s'étend vers le bas au niveau du dessous de l'extrémité avant du support (11), une tige de vis (12) est montée dans le manchon de montage et fixée par le biais d'un deuxième écrou (13), une plaque de pression (14) est fixée au niveau du dessous de la tige de vis (12), et la surface de dessous de la plaque de pression (14) est en aboutement contre la fenêtre à hublot à secteur sphérique (23) par le biais d'un outil tampon de caoutchouc (15).

2. Le dispositif de remplacement de bague d'étanchéité pour fenêtre à hublot à secteur sphérique selon la revendication 1, où 24 outils de remplacement (10) sont distribués uniformément dans le sens de la circonférence de l'assise de fenêtre (22) à intervalles.

3. Le dispositif de remplacement de bague d'étanchéité pour fenêtre à hublot à secteur sphérique selon la revendication 1, où le manchon de montage et le support (11) sont agencés obliquement, et un angle inclus entre le manchon de montage et le support est de 60 degrés.

4. Le dispositif de remplacement de bague d'étanchéité pour fenêtre à hublot à secteur sphérique selon la revendication 1, où le support (11) est de structure en parallélépipède rectangle plate, et un anneau à tirer s'étend horizontalement vers l'extérieur au niveau de l'extrémité avant du support.

5. Le dispositif de remplacement de bague d'étanchéité pour fenêtre à hublot à secteur sphérique selon la revendication 1, où la coupe transversale de l'anneau de pression (24) est d'une structure de type en « L ».

6. Un procédé de remplacement utilisant le dispositif de remplacement de la bague d'étanchéité pour fenêtre à hublot à secteur sphérique selon la revendication 1, comprenant les étapes fonctionnelles suivantes :
étape I : tout d'abord, monter les outils de remplacement (10) un par un, spécifiquement, monter le deuxième écrou (13) sur la tige de vis (12), visser le deuxième écrou (13) depuis l'extrémité de dessus de la section filetée de la tige de vis (12) jusqu'à l'extrémité de dessous, et monter la tige de vis (12) dans le manchon de montage au niveau du dessous du support (11) ;
étape II : démonter les boulons d'assemblage de l'assise de fenêtre (22) et la bride (21), et monter 24 outils de remplacement (10) sur l'assise de fenêtre (22) et la bride (21) un par un, où un outil de remplacement (10) est monté tandis qu'un boulon d'assemblage est démonté, et ainsi de suite, jusqu'à ce que les 24 outils de remplacement (10) soient tous montés, c'est-à-dire que les boulons d'assemblage soient tous démontés ;
étape III : monter une nouvelle bague d'étanchéité (30) entre les outils de remplacement (10) et l'assise de fenêtre (22) à partir d'un espace entre la tige de vis (12) et une surface sphérique externe de la fenêtre à hublot à secteur sphérique (23) ;
étape IV : monter la plaque de pression (14) et l'outil tampon de caoutchouc (15), ajuster de façon précise l'angle de montage de la plaque de pression (14) durant le processus de montage afin que la plaque de pression (14) et la zone de pré-pression de la fenêtre à hublot à secteur sphérique (23) soient parallèles autant que faire se peut, et agrandir la superficie de pré-pression de l'outil tampon de caoutchouc (15) et de la fenêtre à hublot à secteur sphérique (23) afin que la pré-pression soit transmise uniformément à la fenêtre à hublot à secteur sphérique (23) autant que faire se peut ; ajuster la longueur de vissage de la tige de vis (12) en utilisant une clé à tube, et après que la tige de vis a été ajustée en place, visser en serrant étroitement le deuxième écrou (13) afin de réaliser une pré-pression effective de la fenêtre à hublot à secteur sphérique (23), où le fait de monter la plaque de pression (14) et l'outil tampon de caoutchouc (15) doit suivre le principe de montage diagonal ; monter diagonalement quatre sangles d'arrimage au moyen d'assembleurs réservés du support (11) afin de maintenir la fenêtre à hublot à secteur sphérique (23), serrer étroitement les sangles d'arrimage afin de réduire plus avant les risques de chute et de glissement de la fenêtre à hublot à secteur sphérique (23), et isoler la position de contact entre chacune des sangles d'arrimage et la fenêtre à hublot à secteur sphérique (23) au moyen d'un tampon de caoutchouc ;
étape V : démonter quatre des boulons à douille hexagonale (31) (l'intervalle compris entre chaque paire de boulons parmi les quatre boulons à douille hexagonale (31) est de 90 degrés), et monter quatre nouveaux boulons rallongés au lieu des boulons à douille hexagonale (31) sur l'assise de fenêtre (22) ;
étape VI : démonter tous les boulons à douille hexagonale (31), et détacher l'anneau de pression (24) ;
étape VII : démonter une vieille bague d'étanchéité (27) hors d'un espace entre l'anneau de pression (24) et la fenêtre à hublot à secteur sphérique (23), et monter une nouvelle bague d'étanchéité (30) dans une rainure de l'anneau de pression (24) ;
étape VIII : pousser l'anneau de pression (24) afin qu'il s'approche graduellement de l'assise de fenêtre (22), et remonter les boulons à douille hexagonale (31) sur l'assise de fenêtre (22), où les boulons à douille hexagonale (31) doivent être montés lentement tour après tour, et le processus de montage suit le principe du montage diagonal afin d'assurer l'uniformité de compression de la nouvelle bague d'étanchéité (30) ;
étape IX : démonter les quatre nouveaux boulons rallongés, et monter les boulons à douille hexagonale (31) à la place ; et
étape X : démonter les outils de remplacement (10) un par un, et remonter les boulons d'assemblage de l'assise de fenêtre (22) et la bride (21).
